# EUROPEAN PATENT APPLICATION

(11) **EP 2 402 740 A1**
(43) Date of publication of application: **04.01.2012**
(21) Application number: 11171239.4
(22) Date of filing: 23.06.2011
(51) Int. Cl.: G01N 21/88, B23Q 17/24

(54) **Tool wear quantification system and method**

(30) Priority: 29.06.2010 US 825734
(71) Applicant: General Electric Company, Schenectady, NY 12345 (US)
(72) Inventor: Jeyaraman, Satheesh, Niskayuna, NY New York 12309 (US); Harding, Kevin George, Niskayuna, NY New York 12309 (US); Sengupta, Anandraj, Niskayuna, NY New York 12309 (US); Mishra, Debasish, Niskayuna, NY New York 12309 (US); Shankarappa, Suneel Tumkur, Niskayuna, NY New York 12309 (US); Weaver, Howard Paul, Niskayuna, NY New York 12309 (US); Meyer, Kevin William, Niskayuna, NY New York 12309 (US)
(74) Representative: Gray, Thomas

(57) **Abstract**

A portable wear quantification system (10) includes a hand-held image acquisition device (12) and a fixture (14). The fixture (14) includes a first end (26) coupled to the image acquisition device (12). A light source (22) emits a light beam (36) along an emission axis. A beam splitter (24) is disposed at an angle with respect to an axis of view (34) of the image acquisition device (12) for directing the beam from the light source (22) toward a portion of an object. A second end (32) of the fixture (34) is located on an opposite side of the beam splitter (24) from the first end (26). The second end (32) includes a platform (44) that is configured to position the fixture (14) with respect to the object. A channel (30) extends from the first end (26) to the second end (32) along the axis of view (34) of the image acquisition device (12).

## Description

### BACKGROUND

The subject matter disclosed herein relates generally to tool wear measurement, and more particularly to a hand-held light based system and method for measurement and quantification of tool wear.

Wear in cutting tools is a complex process involving physical, chemical, and mechanical contributing factors. Tool wear can be broadly categorized in two types, namely, flank wear and crater wear. Flank wear degrades the nose of the cutting tool and crater wear is formed on the face of the cutting tool above the cutting edge. Tool wear reduces operating life of tool and accounts for most tool failures. Tool wear also affects the dimensions of the work piece. Therefore, it is important to monitor and measure tool wear.

Several approaches for monitoring the condition of a cutting tool and predicting wear have been attempted. For example, Artificial Neural Network techniques can be employed to map the tool wear and the factors affecting the same. Such predictive approaches are less effective when the range of process parameters vary significantly. Cutting force signals and acoustic emission signals can be used for tool condition monitoring since tool wear influences cutting forces and acoustic emission signals. Acoustic emission signals can be more sensitive to tool wear compared to cutting forces because of their frequency range (e.g. 1KHz to 1MHz). However, acoustic emission signals are sensitive to sensor location and cutting parameters, making this approach less effective. Vision based approaches have also been used to evaluate tool wear. However, vision based systems have a complicated setup that would be difficult to employ in a shop floor environment.

It would therefore be desirable to provide a simple, accurate, and robust tool wear measurement system and method that can be used in a shop floor environment for monitoring tool wear during inspection and maintenance.

### BRIEF DESCRIPTION

In accordance with one embodiment of the present invention, a portable wear quantification system is disclosed. The system includes a hand-held image acquisition device and a fixture. The fixture includes a first end coupled to the image acquisition device. A light source emits a light beam along an emission axis. A beam splitter is disposed at an angle with respect to an axis of view of the image acquisition device for directing the beam from the light source toward a portion of an object. A second end of the fixture is located on an opposite side of the beam splitter from the first end. The second end includes a platform that is configured to position the fixture with respect to the object. A channel extends from the first end to the second end along the axis of view of the image acquisition device.

In accordance with another exemplary embodiment of the present invention, a method of quantifying wear is disclosed.

### DRAWINGS

These and other features, aspects, and advantages of the present invention will become better understood when the following detailed description is read with reference to the accompanying drawings in which like characters represent like parts throughout the drawings, wherein:
FIG. 1 illustrates an embodiment of a portable wear quantification system in accordance with aspects disclosed herein.
FIG. 2 illustrates an embodiment of a processing system in accordance with aspects disclosed herein
FIG. 3 illustrates a digital image of a tool tip in accordance with aspects disclosed herein.
FIG. 4 illustrates a processed image of the tool tip of FIG. 3 in accordance with aspects disclosed herein.
FIG. 5 illustrates a digital image of another tool tip in accordance with aspects disclosed herein.
FIG. 6 illustrates a processed image of the tool tip of FIG. 5 in accordance with aspects disclosed herein.
FIG. 7 illustrates an embodiment of a fixture in accordance with aspects disclosed herein.
FIG. 8 illustrates another embodiment of a fixture in accordance with aspects disclosed herein.
FIG. 9 illustrates a rear perspective view of a back section of the fixture of FIG. 8.
FIG. 10 illustrates a rear perspective view of a front section of the fixture of FIG. 8.
FIG. 11 illustrates an embodiment of a wear quantification method in accordance with aspects disclosed herein.

### DETAILED DESCRIPTION

Embodiments disclosed herein include a wear quantification system and method. The wear quantification system includes an image acquisition device, a fixture attached to the image acquisition device, and a processing system. The fixture includes a light source and directs the light from the light source to co-axially illuminate a portion of the object that is prone to wear. An image of the illuminated portion is acquired and processed to identify and quantify wear. As used herein, "wear quantification" and "wear measurement" are used interchangeably and singular forms such as "a," "an," and "the" include plural referents unless the context clearly dictates otherwise.

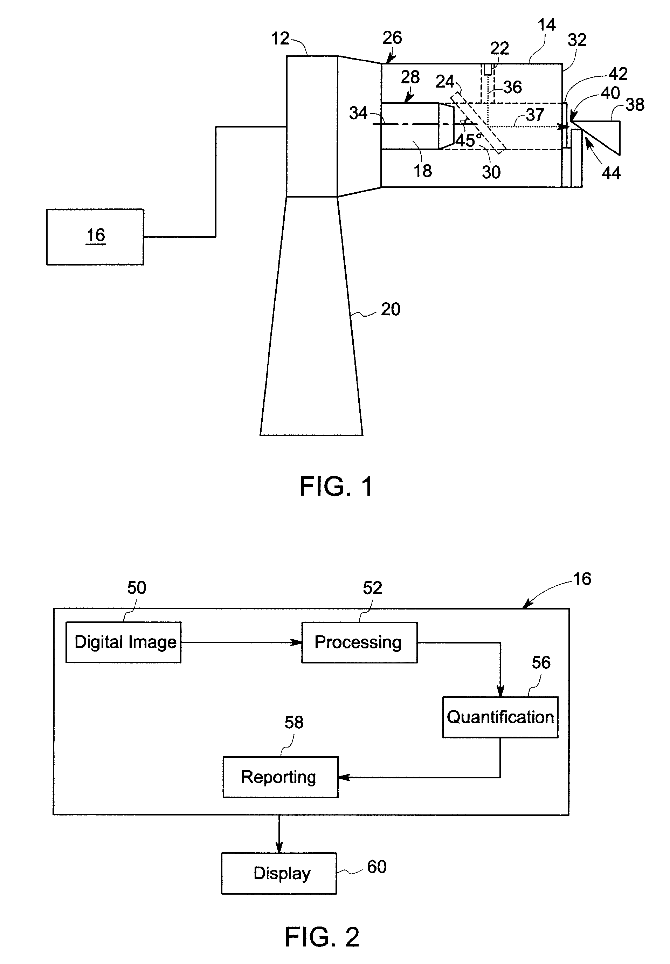

FIG. 1 shows an embodiment of a portable wear quantification system 10. The wear quantification system 10 includes an image acquisition device 12, a fixture 14, and a processing system 16. The image acquisition device 12 can be any device such as, for example, a digital camera or a digital microscope, that is capable of acquiring digital images. In one embodiment, the image acquisition device 12 includes a lens portion 18 and a handle 20.

In one embodiment, the fixture 14 is a substantially cylindrical body housing a light source 22 and a beam splitter 24. A first end 26 of the fixture 14 is adapted to be coupled to the lens portion 18 of the image acquisition device. The first end 26 of the fixture 14 includes a cavity 28 that is designed to snugly fit over the lens portion 18 of the image acquisition device 12. The fixture 14 also includes a channel 30 that extends along the length of the fixture 14 from the first end 26 of the fixture 14 to a second end 32 of the fixture 14 that is opposite the first end 26. The channel 30 is at the center of the fixture 14 and is in alignment with the axis of view 34 of the image acquisition device 12.

The light source 22 is positioned such that a light beam 36 emitted from the light source 22 is perpendicular to the axis of view 34 of the image acquisition device 12. In one embodiment, a light emitting diode (LED) is used as the light source 22. The LED 22 can be powered from the image acquisition device. In one embodiment, an LED capable of producing around 35 Lumens can be used. The beam splitter 24 is positioned at an angle of 45 degrees with respect to the axis of view 34. The beam splitter 24 is below the light source 22 such that the light beam 36 emitted from the light source 22 incident on the beam splitter 24. The beam splitter 24 directs the light beam 36 along the channel 30 toward the second end 32 of the fixture 14. The beam splitter 24 is transparent to provide unobstructed view to the image acquisition device 23.

To measure wear on an object such as a cutting tool 38, the fixture 14 is positioned to direct the light 36 toward a portion of the object that is prone to wear. In one embodiment, the wear quantification system 10 is used to quantify wear on a cutting tool 38. Typically, a cutting portion (i.e. tip 40) of the cutting tool 38 is prone to wear. Therefore, the tip 40 of the cutting tool 38 is illuminated with the light 37 directed by the beam splitter 24. Specifically, the beam splitter 24 directs the light 37 to co-axially illuminate the tip 40 of the cutting tool 38. Co-axial illumination or direct on-axis illumination can be defined as illuminating with light that is parallel to the channel 30, which is in turn parallel to the axis of view 34 of the image acquisition device 12.

The second end 32 of the fixture 14 is provided with an optical window 42. In one embodiment, the optical window 42 covers the channel 30 and is at the focal point of the image acquisition device 12. A portion of the cutting tool such as the tip 40 can be made to abut the optical window 42 to ensure that the tip 40 is at the focal spot. A Sapphire piece can be used as the optical window 42. In one embodiment, the optical window 42 is perpendicular to the axis of view 34. In another embodiment, the optical window 42 is slightly inclined at an angle, for example, of about 8 degrees, toward the first end 26.

The fixture 14 further comprises a platform 44 at the second end 32 beyond the optical window 42. This platform 44 can be used to position the fixture 14 with respect to the tool 38. For example, to measure a potential flank wear on the tip 40 of the tool 38, the platform 44 is made to abut a portion of the cutting tool 38 below the tip 40 of the tool 38. With this positioning and along with co-axial illumination, light 37 is made to incident normally to a surface of a worn portion of the tip 40 and reflect back specularly from the surface of the worn portion of the tip 40. Specular reflection produces brighter illumination, thereby highlighting the worn portion compared to a non-worn portion of the tip 40. The image acquisition device 12, viewing the tip 40 through the channel 30, captures an image of the illuminated tip 40. The acquired image is then sent to processing system 16 to quantify wear of the tip 40 of the cutting tool 38. The design of the platform 44 ensures that the tool 38 is made accessible for on-machine measurements i.e. the need for removing the tool 38 from a machine is eliminated.

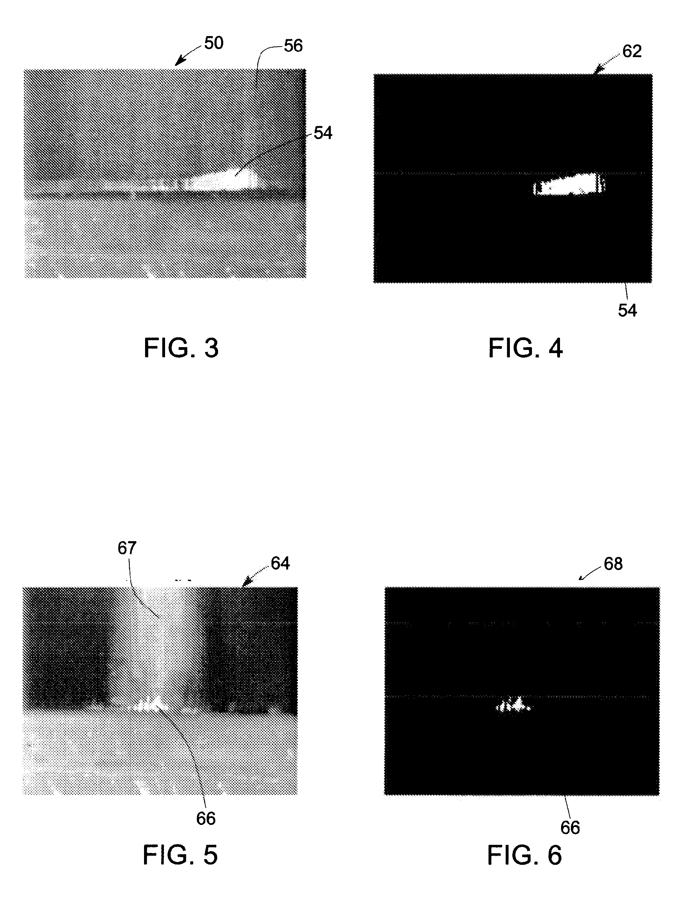

Referring to FIGS. 2, the processing system 16 for processing a digital image 50 acquired by the image acquisition device is disclosed. Firstly, the processing system 16 uses a processing technique 52 to identify regions of wear. In one embodiment, the processing technique 52 may include an image segmentation technique to identify regions of wear. Image segmentation techniques such as, but not limited, threshold-based algorithms and variance-based algorithms can be used to outline the wear in the acquired image based on the intensity of light. In other embodiments, other processing techniques for indentifying regions of wear are also envisaged. In one embodiment, both threshold-based algorithms and variance-based algorithms can be used in series. A threshold algorithm can be used to segment out the brighter regions 54 (shown in FIG. 3) in the image. Following which, a variance based edge operator can be used on the image resulted from the threshold operation to find the boundaries of the bright regions. The intersection of images from the threshold operation and the variance-based operation can be used to obtain the wear boundary.

Quantifying 56 the wear includes determining the area of the wear that is identified from the segmentation process. Wear can be quantified by first using calibration techniques for determining the size of each pixel in measurements units such as mils, millimeter, etc. In one embodiment, standard Eddy Current blocks (not shown) having notches of standard depths or gauge blocks can be used for calibration. These blocks are placed on the platform (shown in FIG. 1) at the focal distance of the image acquisition device (shown in FIG. 1). The image acquisition device can be used to capture an image of the notch portion of the block. As the depth of the notch is known, the size of each pixel can be calculated. The total number of pixels in the area of wear can be determined and the area of wear can be obtained in mils. In another embodiments, a stage micrometer or a net-grid can be similarly used to calibrate and determine size of each pixel.

The identified wear and wear quantification data such as the area of wear are then reported 58. In one embodiment, a display 60 is used to report the processed image with identified wear and wear quantification data in real-time. The display 60 is associated with the processing system 16. In one embodiment, the processing system 16 and the display 60 can be a computing system with a screen (for example, a laptop).

Referring to FIG. 3, a digital image 50 of a tool tip is disclosed. The brighter region 54 is indicative of a worn portion of the tool tip. The reference numeral 56 is indicative of a non-worn portion of the tool tip.

Referring to FIG. 4, a processed image 62 of the tool tip of FIG. 3 is disclosed. Both the digital image 50 (in FIG. 3) and processed image 62 can be displayed. Processed images and wear quantification data can then be stored. The stored data can be used to assess progress of wear.

Referring to FIG. 5, a digital image 64 of another tool tip is disclosed. The brighter region 66 is indicative of a worn portion of the tool tip. The reference numeral 67 is indicative of the non-worn portion of the tool tip.

Referring to FIG. 6, a processed image 68 of the tool tip of FIG. 5 is disclosed.

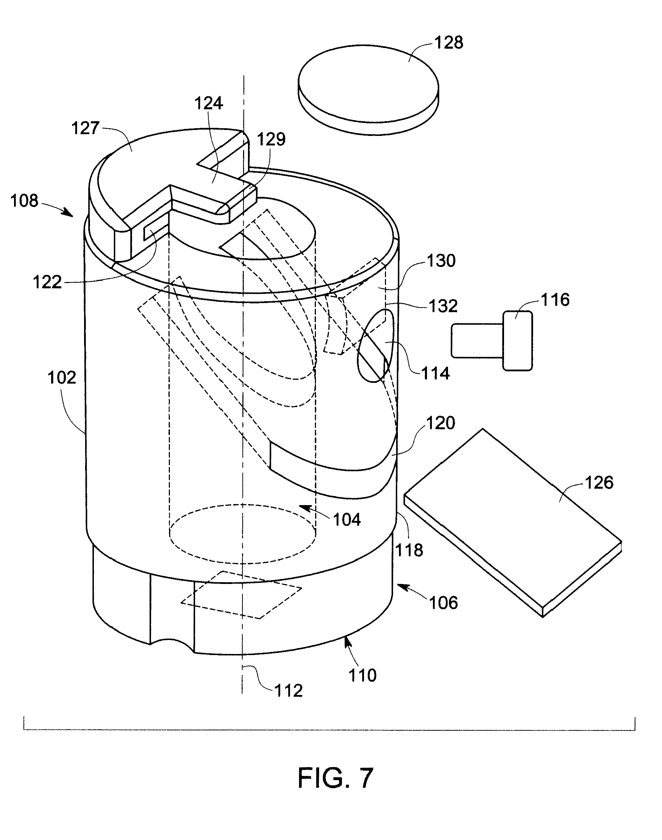

FIG. 7 illustrates an embodiment of a fixture 100. The fixture 100 includes a substantially cylindrical body 102. The cylindrical body 102 includes a central channel 104 that extends axially along a length of a body 102 from a first end 106 of the body 102 to a second end 108 of the body. The first end 106 of the body 102 includes a cavity or a sleeve 110 beyond the channel 104. The sleeve 110 can be dimensioned to snugly fit over a lens portion of an image acquisition device. A central axis 112 of the body 102 will be in line with the axis of view of an image acquisition device after the fixture 100 is coupled to the image acquisition device.

The body 102 includes a hole 114 for inserting a light source 116 such as an LED. The hole 114 extends from an outer surface 118 of the body 102 into the channel 104. The hole 114 is perpendicular to the central axis 112 of the body. The body 102 also includes a beam splitter slot 120, an optical window slot 122, and a platform 124. The beam splitter slot 120 is at an angle of 45 degrees with respect to the central axis 112 of the body. A beam splitter 126 can be inserted into the beam splitter slot 120. The platform 124 and the optical window slot 122 are at the second end 108 of the fixture 100. The platform 124 includes a chord segment 127 and a projected portion 129. The size of the platform 124 can be selected based on the objects or tools to be measured for wear. An optical window 128 is inserted into the optical window slot 122 to cover the channel 104 at the second end 108.

In one embodiment, the fixture 100 can be provided with an optical diffuser 130 and a slot 132 for disposing the optical diffuser 130 at the surface of the channel 104. The optical diffuser 130 is located between the beam splitter 126 and the second end 108 of the fixture. The optical diffuser 130 de-sharpens light to prevent excessive glare from tools, especially in the case of circular tools.

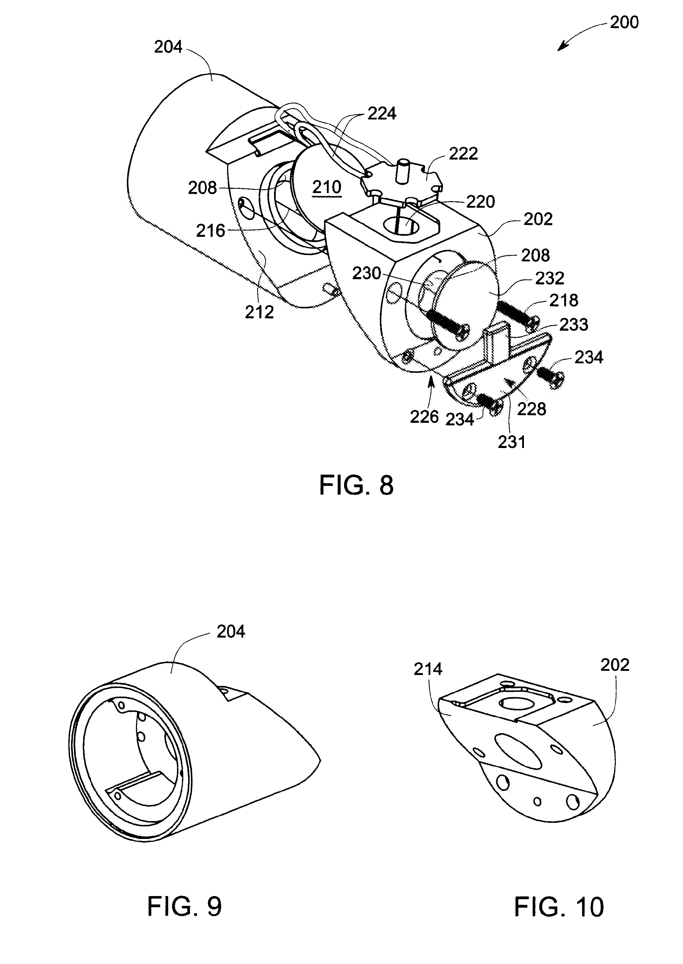

Referring to FIG. 8, another embodiment of the fixture 200 is presented. The fixture 200 is designed as a multi-part structure that can be used with any image acquisition device with or without adjustable focus. The fixture 200 includes a substantially cylindrical body that includes a front section 202, a back section 204. Both the front section 202 and back section 204 include a channel. A beam splitter 210 is positioned between the front section 202 and the back section 204. A matching surface 212 of the back section 204 and a corresponding matching surface 214 (shown in FIG. 10) of the front section 202 are at an angle such that the beam splitter 210 is at an angle of about 45 degrees with respect to central axis 216. The front section 202 and back section 204 can be coupled using screws 218.

The front section 202 includes a hole 220 for inserting the light source 222. The hole 220 is perpendicular to the central axis 216. Power cables 224 of the light source 222 can be connected to an image acquisition device. The second end 226 of the fixture 200 includes a platform 228 and a slot 230 for an optical window 232. The platform 228 includes a chord segment 231 and a projected portion 233. The optical window 232 is placed in the slot 230 and the platform 228 can then be secured to the front section 202 with screws 234.

Referring to FIG. 9, the back section 204 of the fixture is illustrated.

Referring to FIG. 10, the front section 202 having the matching surface 214 is illustrated.

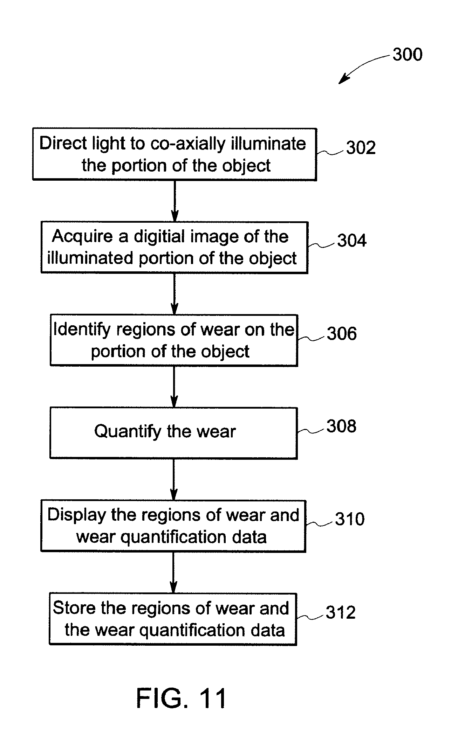

FIG. 11 illustrates an embodiment of a wear quantification method 300. At block 302, light from a light source is directed to co-axially illuminate a portion of the object. In one embodiment, the object is a cutting tool and the portion is the cutting tip of the cutting tool. With co-axial illumination, light will incident normally to the portion of the object and reflects back specularly or brightly from a wear surface of the cutting tip of the tool. A digital image of the illuminated portion of the object is then acquired at block 304. Regions of wear on the portion of the object are identified as those regions with relatively high intensity of reflection at block 306. In one embodiment, segmentation techniques are used to identify regions of wear. In other embodiments, other processing techniques used to identify regions of wear are also envisaged. At block 308, wear is quantified by determining the area or the extent of wear. Images of regions of wear and wear quantification data are displayed at block 310. At block 312, digital and processed images of regions of wear and wear quantification data are stored and can be retrieved.

The wear quantification system and method described above thus provide a way to monitor tool wear during inspection and maintenance. The wear quantification system is portable and can be used in a shop floor environment. Both on-machine and off-machine measurements can be performed by the wear quantification system and method. Tools need not be separated from their machines. Tool wear can be quantified and decision about usability of tool can be made based on the extent of wear. Since the tool wear data is stored and can be retrieved, a current tool wear data of a tool can be compared with prior tool wear data of the same tool and progress of wear can be assessed.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A portable wear quantification system, comprising:
   an hand-held image acquisition device;
   a fixture comprising:
      a first end coupled to the image acquisition device;
      a light source emitting a light beam along an emission axis;
      a beam splitter disposed at an angle with respect to an axis of view of the image acquisition device for directing the beam from the light source toward a portion of an object;
      a second end that is located on the opposite side of the beam splitter from the first end, the second end comprising a platform that is configured to position the fixture with respect to the object; and
      a channel extending from the first end to the second end along the axis of view of the image acquisition device.
2. The system of clause 1, wherein the light source is positioned such that the emission axis is perpendicular to the axis of view.
3. The system of clause 1, wherein the beam splitter is disposed at an angle of about 45 degrees with respect to the axis of view for directing the light toward the portion of the object to co-axially illuminate the portion of the object.
4. The system of clause 3, wherein the fixture is positioned with respect to a worn portion of the object to enable specular reflection from the worn portion of the object when compared with a non-worn portion of the object.
5. The system of clause 1, wherein the fixture further comprises an optical diffuser.
6. The system of clause 1, wherein the fixture further comprises a platform for positioning the fixture with respect to the object.
7. The system of clause 6, wherein the platform comprises a chord segment and a projected portion.
8. The system of clause 1, wherein the second end further comprises an optical window at a focal distance of the image acquisition device.
9. The system of clause 1, wherein the optical window comprises a sapphire piece.
10. The system of clause 1, wherein the image acquisition device comprises a digital microscope.
11. The system of clause 1, wherein the image acquisition device comprises a digital camera.
12. The system of clause 1, wherein the first end is coupled to a lens portion of the image acquisition device
13. The system of clause 1, further comprising a processing system for acquiring images of the portion of the object illuminated by the light from the light source and processing the acquired images to identify and quantify wear on the portion of the object.
14. The system of clause 1, wherein the object comprises a cutting tool and the portion comprises a cutting portion of the cutting tool.
15. A method of quantifying wear, comprising:
   directing light from a light source toward a portion of an object to co-axially illuminate the portion of the object and enable specular reflection from the portion of the object;
   acquiring a digital image of the illuminated portion of the object; and
   processing the acquired digital image, comprising:
      identifying regions of wear on the portion of the object as those regions with relatively high intensity of reflection; and
      quantifying the wear on the portion of the object from the identified regions of wear.
16. The method of clause 15, further comprising:
   displaying the regions of wear and wear quantification data; and
   storing the regions of wear and the wear quantification data.
17. The method of clause 15, further comprising: diffusing the light before illuminating the portion of the object.
18. The method of clause 15, wherein the object comprises a cutting tool and the portion comprises a cutting portion of the cutting tool.
19. A device for retrofit on an image acquisition device to quantify wear, comprising:
   a first end coupled to the image acquisition device;
   a light source emitting a light beam along an emission axis;
   a beam splitter disposed at an angle with respect to an axis of view of the image acquisition device for directing the beam from the light source toward a portion of an object;
   a second end that is located on the opposite side of the beam splitter from the first end, the second end comprising a platform that is configured to position the fixture with respect to the object; and
   a central channel extending from the first end to the second end along the axis of view of the image acquisition device.
20. The device of clause 19, wherein the light source is positioned such that the light from the light source is perpendicular to the axis of view.
21. The device of clause 19, wherein the beam splitter is disposed at an angle of about 45 degrees with respect to the axis of view.
22. The device of clause 19, further comprising an optical diffuser.
23. The device of clause 19, wherein the second end further comprises an optical window at the focal distance of the image acquisition device.
24. The device of clause 19, wherein the first end is coupled to a lens portion of the image acquisition device.

## Claims

1. A portable wear quantification system (10), comprising:
an hand-held image acquisition device (12);
a fixture (14) comprising:
a first end (26) coupled to the image acquisition device (12);
a light source (22) emitting a light beam (36) along an emission axis;
a beam splitter (24) disposed at an angle with respect to an axis of view (34) of the image acquisition device (12) for directing the beam (36) from the light source (22) toward a portion of an object;
a second end (32) that is located on the opposite side of the beam splitter (24) from the first end (26), the second end (32) comprising a platform (44) that is configured to position the fixture (14) with respect to the object; and
a channel (30) extending from the first end (26) to the second end (32) along the axis of view (34) of the image acquisition device (12).

2. The system (10) of claim 1, wherein the light source (22) is positioned such that the emission axis is perpendicular to the axis of view (34).

3. The system (10) of claim 1 or 2, wherein the beam splitter (24) is disposed at an angle of about 45 degrees with respect to the axis of view (34) for directing the light (37) toward the portion of the object to co-axially illuminate the portion of the object.

4. The system (10) of any of the preceding claims, wherein the fixture (14) further comprises an optical diffuser (130).

5. The system (10) of any of the preceding claims, wherein the fixture (14) further comprises a platform (44) for positioning the fixture (14) with respect to the object.

6. The system (10) of any of the preceding claims, wherein the second end (32) further comprises an optical window (42) at a focal distance of the image acquisition device (12).

7. The system (10) of any of the preceding claims, wherein the first end (26) is coupled to a lens portion (18) of the image acquisition device (12).

8. The system (10) of any of the preceding claims, further comprising a processing system (16) for acquiring images of the portion of the object illuminated by the light from the light source (22) and processing the acquired images to identify and quantify wear on the portion of the object.

9. A method of quantifying wear, comprising:
directing light from a light source (22) toward a portion of an object to co-axially illuminate the portion of the object and enable specular reflection from the portion of the object;
acquiring a digital image (50) of the illuminated portion of the object; and
processing the acquired digital image (50), comprising:
identifying regions of wear on the portion of the object as those regions with relatively high intensity of reflection; and
quantifying the wear on the portion of the object from the identified regions of wear.

10. A device for retrofit on an image acquisition device (12) to quantify wear, comprising:
a first end (26) coupled to the image acquisition device (12);
a light source (22) emitting a light beam along an emission axis;
a beam splitter (24) disposed at an angle with respect to an axis of view (34) of the image acquisition device (12) for directing the beam from the light source (22) toward a portion of an object;
a second end (32) that is located on the opposite side of the beam splitter (24) from the first end (26), the second end (32) comprising a platform (44) that is configured to position the fixture (14) with respect to the object; and
a central channel (30) extending from the first end (26) to the second end (32) along the axis of view (34) of the image acquisition device (12).
